# EUROPEAN PATENT SPECIFICATION

(11) **EP 3 087 291 B1**
(45) Date of publication and mention of the grant of the patent: **08.01.2020**
(21) Application number: 14835523.3
(22) Date of filing: 24.12.2014
(51) Int. Cl.: F16D 55/228

(54) **DISC BRAKE CALIPER BODY AND DISC BRAKE CALIPER**
SCHEIBENBREMSSATTELKÖRPER UND SCHEIBENBREMSSATTEL
CORPS D'ÉTRIER DE FREIN À DISQUE ET ÉTRIER DE FREIN À DISQUE

(30) Priority: 27.12.2013 IT MI20132211
(43) Date of publication of application: 02.11.2016
(73) Proprietor: Freni Brembo S.p.A., 24035 Curno (Bergamo) (IT)
(72) Inventor: CRIPPA, Cristian, 24035 Curno (Bergamo) (IT); SCOTTI, Fabio, 24035 Curno (Bergamo) (IT); PUDDU, Armando, 24035 Curno (Bergamo) (IT)
(74) Representative: Crippa, Paolo Ernesto
(86) International application number: PCT/IB2014/067307
(87) International publication number: WO 2015/097678

(56) References cited:
- EP-A1- 1 881 223
- EP-A1- 2 022 999
- WO-A1-2013/121393
- FR-A- 1 309 863

## Description

### Field of the invention

This invention relates to a caliper body for a disc brake, for example for a motor vehicle, as well as to a disc brake caliper that comprises such a body.

### State of the art

In particular, in a disc brake, the brake caliper is arranged astride the outer peripheral margin of a brake disc. The brake caliper usually comprises a body having two elongated elements that are arranged so as to face opposite braking surfaces of a disc. Friction pads are provided arranged between each elongated portion of the caliper and the braking surfaces of the disc brake. At least one of the elongated portions of the caliper body presents cylinders suitable to accommodating hydraulic pistons capable of exerting a thrust action on the brake pads abutting them against the braking surfaces of the disc to exert a braking action on the vehicle.

The brake calipers are usually bound to a support structure that remains stationary to the vehicle, such as, for example, a stub axle of a suspension of a vehicle.

In a typical arrangement, one of the two elongated portions presents two or more connection portions of the caliper body to the support structure, for example by providing slots or eyelets, for example, arranged axially, or through holes, for example arranged radially, suitable to receive screws for fixing the caliper that, with their ends are received in threaded holes provided on the caliper support.

In a typical caliper body construction, the elongated portions arranged facing the braking surfaces of the disc are connected to each other by bridge members placed astride the disc.

A caliper body of this type is described in EP-A-2022999**.** Figure 1 of EP-A-2022999 shows a caliper body of the fixed-caliper type. This caliper body is of the monobloc type comprising two elongated portions whose ends are connected to each other by bridges. Stiffening bars extend between the elongated portions and between the two bridges forming a cross structure. Further solution is described in W**O2013/121393A1.**

The caliper comprises various components mounted on the body such as pistons, seals, purge devices and brake fluid feed conduits.

Typically, the caliper body is made of metal such as aluminium, aluminium alloy or cast iron. The caliper body can be obtained by casting, but also by machining with chip removal, as well as by forging.

The caliper body can be produced either as a single piece or monobloc, but also as two half-calipers typically connected to each other along a plane that usually coincides with the median plane of the disc on which the caliper sits astride.

If the driver of the vehicle wants to brake or slow the movement of the vehicle, he applies a force on the brake pedal, in the case of a motor vehicle. Through a brake pump, this force on the brake pedal exerts pressure on the brake fluid that, through a conduit, is applied to the fluid in the hydraulic circuit inside the caliper body until it arrives at the cylinders where the pressure is exerted on the bottom surface of the pistons, forcing them to clamp against the pads, which in turn abut against the braking surfaces of the disc.

The action of the brake fluid pressure is also exerted on the bottom wall of the cylinder causing a reaction in the caliper body which pushes on the surfaces of the disc, deforming them. This deformation of the caliper body leads to an increase of the stroke of the pistons and therefore to an increase of the stroke of the brake pedal.

In addition, the caliper body is also deformed as a function of the torque exerted by the action of the pistons that push the pads against the braking surfaces of the disc and apply, in directions that form arms of torque with respect to the fixing points of the caliper body to its support, a moment of deformation. These torques also deform the caliper body in a direction tangential and radial with respect to the disc, as well as axial.

The caliper body must therefore have sufficient structural rigidity, so as to ensure that this deformation of the caliper body caused by the braking action is maintained within acceptable values, that in addition to avoiding damage to the braking system do not give the driver the sensation that the braking system is failing, resulting in an overstroke of the braking system lever or pedal, creating the feeling of a "spongy" system. This need requires the caliper bodies to have an extremely rigid structure, thus increasing their bulk and weight.

On the other hand, since the caliper body is bound to the suspension of the vehicle and arranged astride the disc, it results in unsprung mass that should be reduced as much as possible to increase the performance of the vehicle.

Obviously, these considerations are taken to the extreme when the vehicle is a race car and the user wishes to have a braking system that is extremely responsive and, at the same time, extremely light so as not to affect the performance of the race car.

There is therefore a need for a disc brake caliper body with improved structural characteristics at the same caliper body weight, or equal structural characteristics at a lighter weight with respect to the solutions of the known art.

There are known caliper body solutions specifically designed to increase the characteristics of structural. rigidity. For example, European patents EP-A-2022999**,** cited above, EP-A-153497 and EP-A-1911989**,** United States patents US-6708802 and US 3183999**,** international patent application PCT/EP2005/050 615 and Japanese patent application JP-A-09257063 all present brake caliper body solutions provided with reinforcing members, for example placed around the caliper bodies. In some of these known solutions, the caliper body is of a symmetrical type according to planes passing through the axis of the disc or the centreline of the disc. In other solutions, the caliper body has large and distributed windows, even pass-through, that form elongated reinforcement members arranged longitudinally to the caliper body.

Although satisfactory from many points of view, these known solutions do not allow to obtain structures that maximize the structural rigidity of the caliper body, reducing weights and, at the same time, able to contain, as much as possible the mass and therefore the weight of the caliper body, as well as reducing the bulk of the caliper body so as to facilitate the mounting of the caliper body also inside rims and wheels on which large diameter brake discs are mounted.

### Solution

Therefore, the purpose of this invention is to propose a caliper body and a disc brake caliper that allow overcoming the drawbacks of the solutions of the known art.

These and further purposes are achieved by means of a caliper body as described in claim **1** annexed here, as well as by a disc brake caliper described in claim 9 and a disc brake caliper assembly described in claim **10.**

These solutions allow achieving two conflicting requirements:
- obtaining a caliper body that is structurally very strong and capable of withstanding high stresses, for example as exercised during braking actions in heavy vehicles such as SUVs (Sports Utility Vehicles);
- obtaining a caliper body with reduced weight.

These solutions allow finding a braking system solution even for off-road vehicles, while, at the same time, meeting a third requirement:
- protecting portions of the brake caliper body that house the thrust devices, as well as protecting the bleed valve and possibly the supply conduits of the brake fluid between one elongated portion and the facing elongated portion through external conduits connected to the brake fluid distribution circuit.

### Figures

Further characteristics and advantages of the assembly according to the invention will appear in the following description of its preferred embodiments, provided by way of non-limiting example, with reference to the annexed figures, wherein:

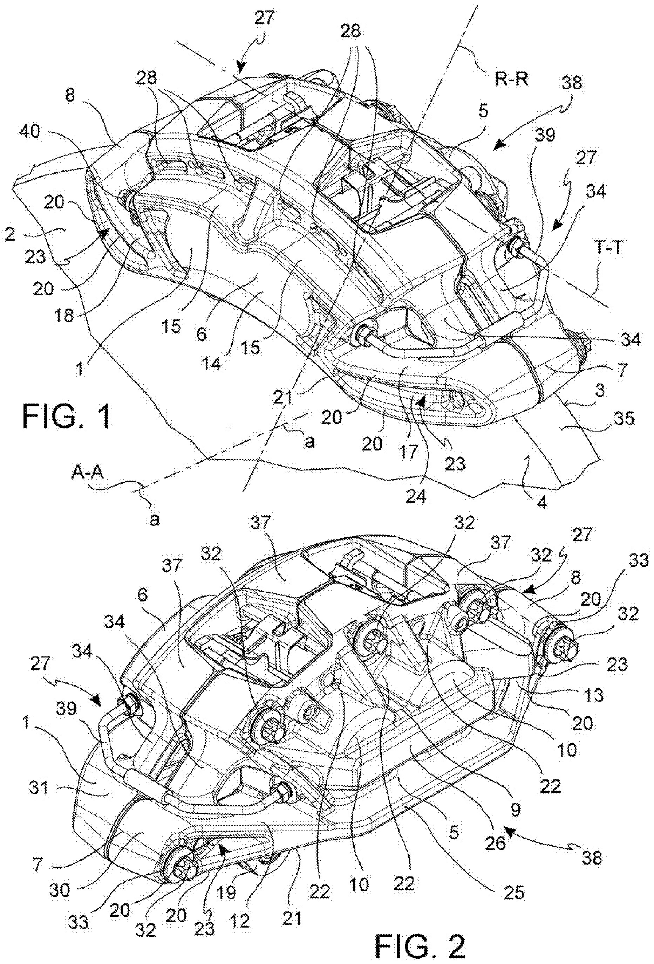

- Figure 1 shows, in an exploded axonometric wheel side view, a disc brake caliper assembly comprising a caliper body and a disc brake disc;
- Figure 2 shows the caliper of Figure 1 in a vehicle side axonometric view;

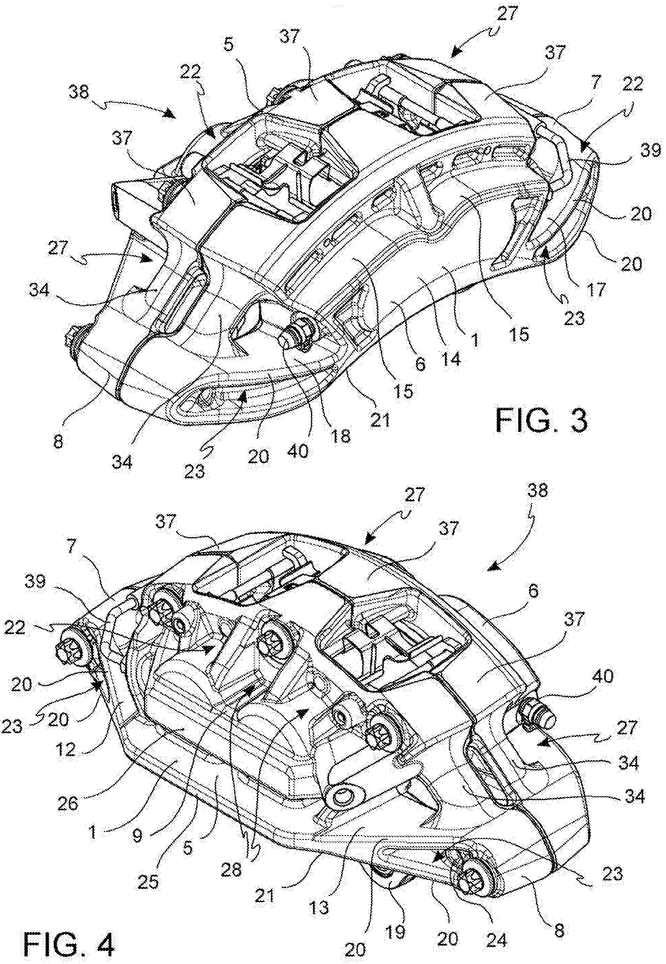

- Figure 3 shows the caliper of Figure 1 in a wheel side axonometric view, but from a different point of view;
- Figure 4 shows the caliper of Figure 1 in a vehicle side axonometric view, but from a different point of view;

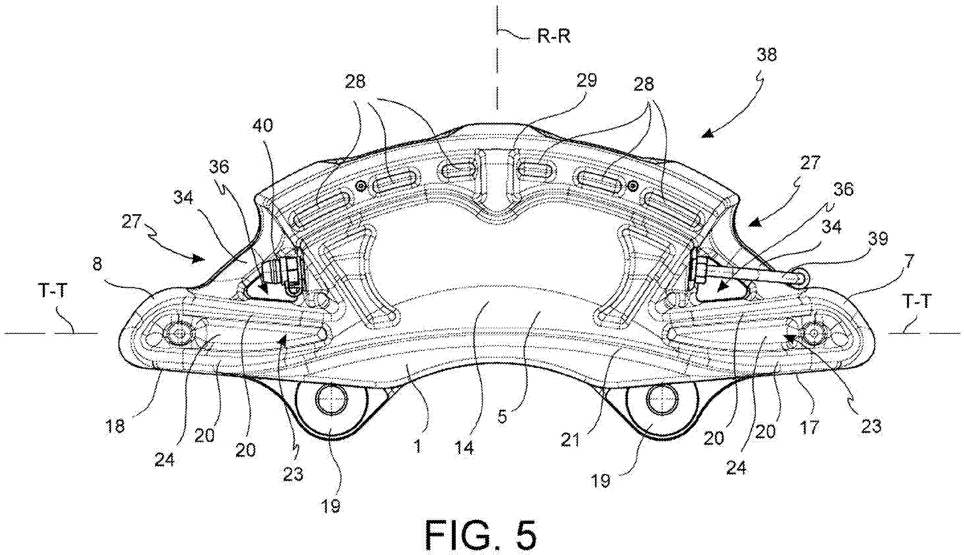

- Figure 5 is a front view of the caliper of Figure 1 from the wheel side;

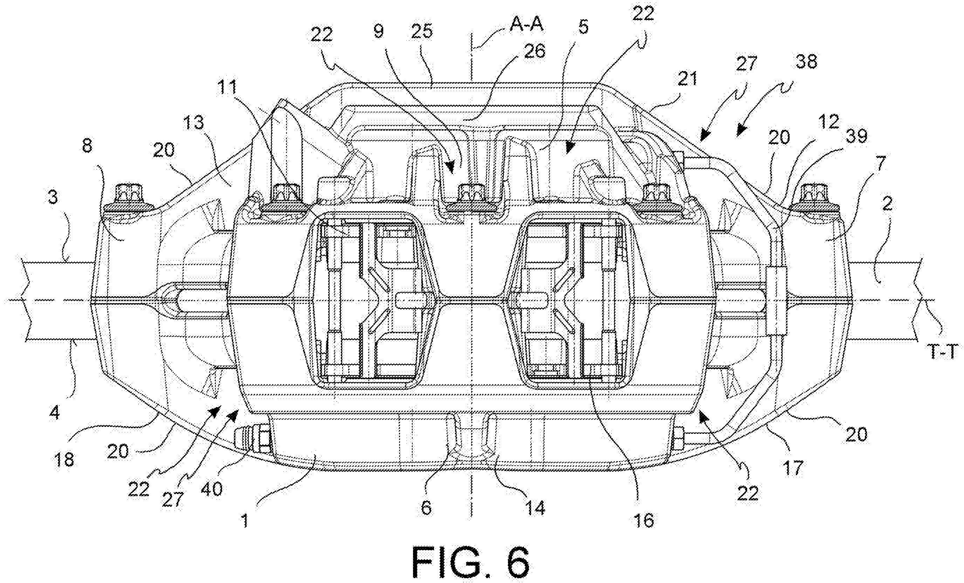

- Figure 6 shows a radially outer (or top) view of the caliper of Figure 1;

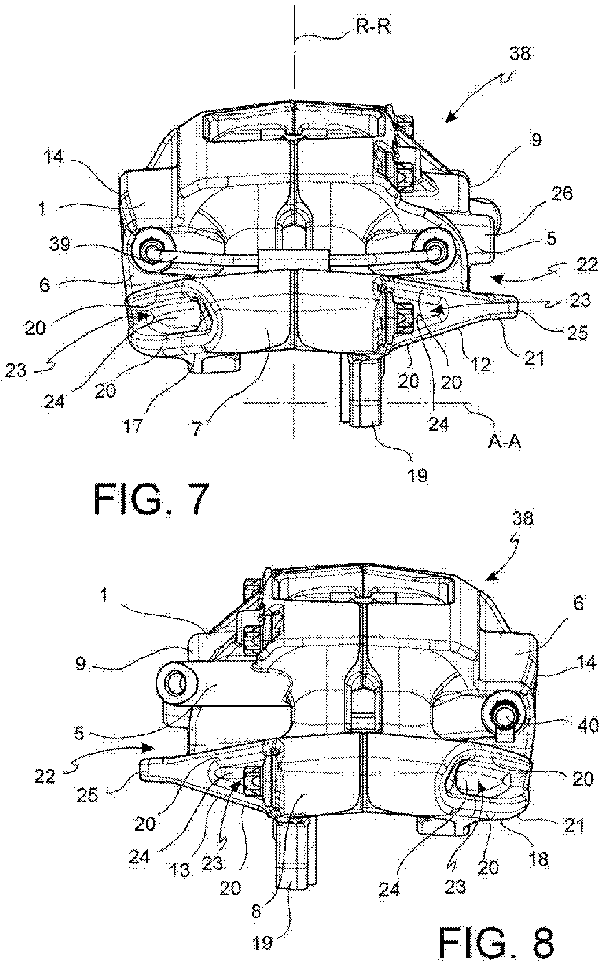

- Figures 7 and 8 are side views of the caliper of Figure 1;

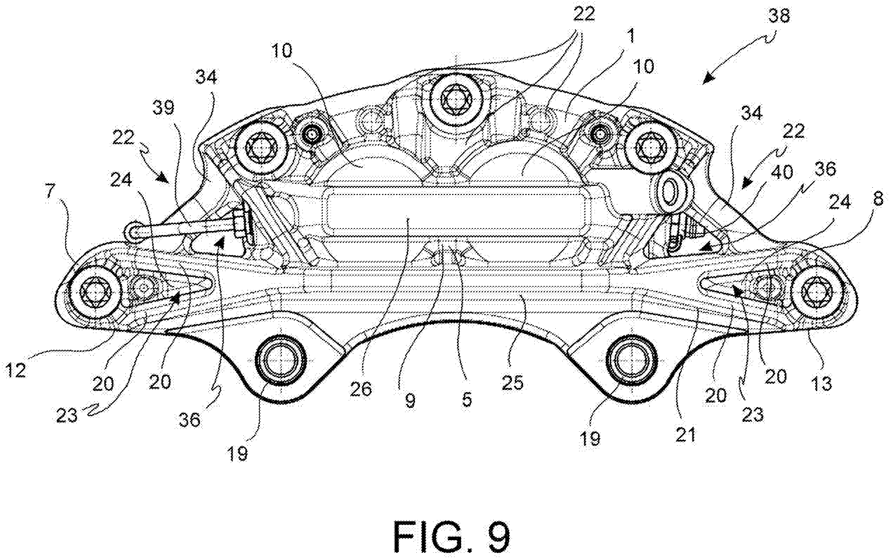

- Figure 9 shows a view from the rear or front side of the vehicle of the caliper of Figure 1;

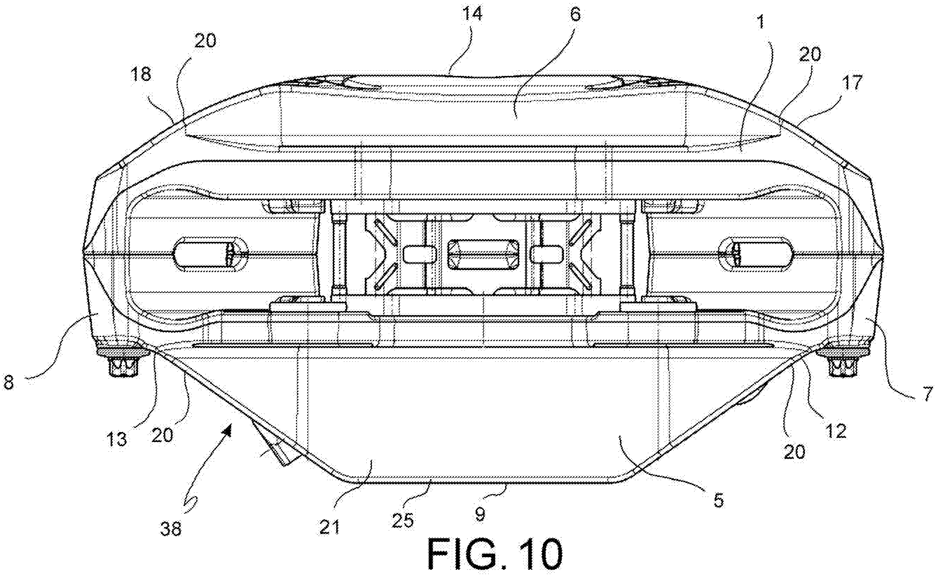

Figure 10 is an view radially internal (or bottom) view of the caliper of Figure 1.

### Description of several preferred embodiments

With reference to the above figures, a caliper body 1 of a disc brake caliper suitable to be arranged astride a brake disc 2.

Said brake disc 2 has a first braking surface 3, or vehicle side braking surface side, and a second braking surface 4, or wheel side braking surface.

Said caliper body assembly 1 and brake disc 2 define an axial direction A-A parallel to or coincident with a rotational axis a-a of the brake disc 2, an orthogonal tangential direction T-T and a radial direction R-R orthogonal to said axial direction A-A and said tangential direction T-T.

Said caliper body 1 comprises a first vehicle side elongated portion 5 suitable to face said first braking surface 3 of the brake disc 2.

Said caliper body 1 comprises a second wheel side elongated portion 6, opposite said first vehicle side elongated portion 5 and suitable to face said second braking surface 4 of the brake disc 2.

Said caliper body 1 comprises a first end bridge 7, or disc input bridge, connecting said first vehicle side elongated portion 5 to said second wheel side elongated portion 6 so as to be arranged astride of the brake disc 2 when the caliper body is assembled to the brake disc.

Said caliper body 1 comprises a second end bridge 8, or disc output bridge, connecting said first vehicle side elongated portion 5 to said second wheel side elongated portion 6 so as to be arranged astride of the brake disc 2 when the caliper body is assembled to the brake disc.

Said first elongated portion 5 comprises a central portion of first elongated portion 9. Said first central portion of first elongated portion 9 comprises at least one thrust device 6 housed therein and suitable to affect a first pad 7 against said first braking surface 3 to exert a braking action.

Said first elongated portion 5 further comprises a first disc input side end portion of first elongated portion 12 placed at the free end of said first elongated portion 5 and connected to said first end bridge 7, or disc input bridge.

Said first elongated portion 5 further comprises a second disc output side end portion of first elongated portion 13 placed at the free end of said first elongated portion 5 and connected to said second end bridge 8, or disc output bridge.

Said second elongated portion 6 comprises a central portion of second elongated portion 14. Said central portion of second elongated portion 14 being arranged facing said central portion of first elongated portion 9 when the caliper body is not mounted astride of the disc and without pads 11, 16.

Said second elongated portion 6 further comprises a first disc input side end portion of second elongated portion 17 arranged at the free end of said second elongated portion 6 and connected to said first end bridge 7, or disc input bridge.

Said second elongated portion 6 further comprises a second disc output side end portion of second elongated portion 18 arranged at the opposite free end of said second elongated portion 6 and connected to said second end bridge 8, or disc output bridge.

According to an embodiment, said first vehicle side elongated portion 5 comprises caliper body securing devices 19 for removably connecting the caliper body 1 to a caliper body support or stub axle of the vehicle.

Said first vehicle side elongated portion 5 and said second wheel side elongated portion 6 extend substantially according to a tangential direction T-T.

According to an embodiment, said caliper body 1 has, in correspondence to at least one of the end portions 12, 13, 17, 18 of the elongated portions 5, 6 a rib having a longitudinal base 20 that extends substantially according to the tangential direction T-T.

Advantageously, according to an embodiment, said longitudinal base ribs 20 are at least one pair of base ribs 20 arranged on the same end portion 12, 13, 17, 18 and are arranged flanking each other extending mutually spaced apart for at least one length thereof.

According to an embodiment, said ribs 20 of the at least one pair of base ribs, in at least one the ends thereof, are mutually joined to form a continuous base rib 20 that is folded onto itself.

According to an embodiment, pairs of base ribs 20 are provided for at each end portion 12, 13, 17, 18 of the elongated portions 5, 6.

According to an embodiment, said second elongated portion 6 comprises a central portion of second elongated portion 14. Said second elongated portion central portion 14 comprising at least one further thrust device 15 housed therein and suitable to affect a second pad 16 against said second braking surface 4 to exert said braking action.

According to an embodiment, said pairs of base ribs 20 project from the caliper body 1 so that, looking at the caliper body along the radial direction R-R, the ribs 20 substantially define the profile of the caliper body for the protection thereof.

According to an embodiment, said pairs of base ribs 20 form an enlarged base 21 according to the axial A-A and tangential T-T directions extending from said central portions 9, 14, so as to protect and stiffen the caliper body 1 and to allow lightening openings or recesses 22.

According to an embodiment, at least one pair of base ribs 20 has the joined portion to form a base rib that is continuous and folded onto itself 20, curving with respect to the tangential direction T-T by folding onto said caliper body 1 to protect the end thereof.

According to an embodiment, said at least one pair of base ribs 20 surrounds a lens-shaped opening 23 in the caliper body 1 having a substantially lens shape.

According to an embodiment, said lens-shaped opening is a non-through or blind opening having a bottom wall 24.

According to an embodiment, both the first elongated portion disc input and output side end portions 12, 13 have said pair of base ribs that is folded onto itself 20.

Advantageously, said pairs of base ribs 20 extend along said first vehicle side elongated portion 5 and are joined in a central rib 25 projecting from the caliper body 1 to the axial direction A-A at least in the first elongated portion central portion 9 to protect the at least one thrust device 10.

According to an embodiment, a further reinforcing rib 26 is provided for, extending parallel to said central rib 25 and is arranged about the at least one thrust device 10.

According to an embodiment, the caliper body 1 reinforced by said at least one pair of base ribs 20 has lightening windows 27 or lightening recesses 28.

According to an embodiment, said lightening recesses 28 are arranged aligned along an upper edge 29 of the second wheel side elongated portion 6.

According to an embodiment, said caliper body comprises two caliper half-bodies 30, 31 mutually connected by calibrated screws 32 that are housed in holes 33 provided for in the caliper half-bodies 30,31, in which at least one or of said holes is provided for at the end portion of the continuous base rib 20 folded onto itself.

According to an embodiment, between said central portions of the first elongated portion and second elongated portion 9, 14 and at least one of said end bridges 7, 8, are provided tangential reinforcing ribs 34 arranged parallel to each other and directed substantially along said tangential direction T-T, or parallel to an outer edge 35 of the brake disc 2 to which said caliper body 1 is suitable to be arranged astride.

According to an embodiment, said tangential reinforcing ribs 34 are detached from said base ribs 20 forming through windows 36 between them and the remaining part of caliper body 1.

According to an embodiment, between said first elongated portion and second elongated portion central portions 9, 14, at least one central connection bridge 37 is provided for.

According to an embodiment, said tangential reinforcing ribs 34 are arranged between said at least one central connection bridge 37 and said at least one of the end bridges 7; 8.

According to a general embodiment, in place of the base ribs 20, between said first elongated portion and second elongated portion central portions 9, 14 and at least one of said end bridges 7, 8, tangential reinforcing ribs 34 are provided for, which are mutually between and substantially directed along said tangential direction T-T or parallel to an outer edge 35 of the brake disc 2 of which said caliper body 1 is suitable to arrange astride, said tangential reinforcing ribs 34 are detached from said base ribs 20, forming through windows 36 between the latter and the remaining part of the caliper body 1.

This invention also relates to a disc brake caliper 38 comprising a caliper body 1 as previously defined. In addition, said caliper further comprises brake pads 11, 16 arranged facing said elongated portions 5, 6 and fluid connection devices of the brake fluid distribution circuit to the thrust devices 39, as well as at least one drain device 40 of the possible air that is present within the brake fluid distribution circuit.

This invention also relates to a disc brake caliper assembly comprising a disc brake caliper 38 and a disc brake 2.

Obviously, a person skilled in the art, in order to satisfy contingent and specific needs, may make numerous modifications and variations to the caliper body and the caliper according to the invention, all however contained within the scope of the invention as defined by the following claims.

According to a general embodiment, a disc brake caliper body 1 is suitable to be arranged astride a brake disc 2. Said brake disc 2 has a first braking surface 3, or vehicle side braking surface side, and a second braking surface 4, or wheel side braking surface. Said assembly defines an axial direction A-A parallel to or coincident with a rotational axis a-a of the brake disc 2, an orthogonal tangential direction T-T and a radial direction R-R orthogonal to said axial direction A-A and said tangential direction T-T.

Said caliper body 1 comprises a first vehicle side elongated portion 5 suitable to face said first braking surface 3 of the brake disc 2.

Said caliper body 1 comprises a second wheel side elongated portion 6, opposite said first vehicle side elongated portion 5 and suitable to face said second braking surface 4 of the brake disc 2.

Said caliper body 1 comprises a first end bridge 7, or disc input bridge, connecting said first vehicle side elongated portion 5 to said second wheel side elongated portion 6 so as to be arranged astride of the brake disc 2 when the caliper body is assembled to the brake disc.

Said caliper body 1 comprises a second end bridge 8, or disc output bridge, connecting said first vehicle side elongated portion 5 to said second wheel side elongated portion 6 so as to be arranged astride of the brake disc 2 when the caliper body is assembled to the brake disc.

Said first elongated portion 5 comprises a central portion of first elongated portion 9. Said first central portion of first elongated portion 9 comprises at least one thrust device 6 housed therein and suitable to affect a first pad 7 against said first braking surface 3 to exert a braking action.

Said first elongated portion 5 further comprises a first disc input side end portion of first elongated portion 12 placed at the free end of said first elongated portion 5 and connected to said first end bridge 7, or disc input bridge.

Said first elongated portion 5 further comprises a second disc output side end portion of first elongated portion 13 placed at the free end of said first elongated portion 5 and connected to said second end bridge 8, or disc output bridge.

Said second elongated portion 6 comprises a central portion of second elongated portion 14. Said central portion of second elongated portion 14 being arranged facing said central portion of first elongated portion 9 when the caliper body is not mounted astride of the disc and without pads 11, 16.

Said second elongated portion 6 further comprises a first disc input side end portion of second elongated portion 17 arranged at the free end of said second elongated portion 6 and connected to said first end bridge 7, or disc input bridge.

Said second elongated portion 6 further comprises a second disc output side end portion of second elongated portion 18 arranged at the opposite free end of said second elongated portion 6 and connected to said second end bridge 8, or disc output bridge.

Said first vehicle side elongated portion 5 comprises caliper body securing devices 19 for removably connecting the caliper body 1 to a caliper body support or stub axle of the vehicle.

Said first vehicle side elongated portion 5 and said second wheel side elongated portion 6 extend substantially according to a tangential direction T-T.

According to a general embodiment, between said first elongated portion and second elongated portion central portions 9, 14 and at least one of said end bridges 7, 8, tangential reinforcing ribs 34 are provided for, which are arranged mutually parallel and substantially directed along said tangential direction T-T or parallel to an outer edge 35 of the brake disc 2 of which said caliper body 1 is suitable to be arranged astride, said tangential reinforcing ribs 34 have a central portion thereof that is detached from the caliper body 1, thus forming through windows 36 between said ribs 34 and the remaining part of the caliper body 1.

### REFERENCES

1 Disc brake caliper
2 disc brake
3 first braking surface
4 second braking surface
5 first vehicle side elongated portion
6 second wheel side elongated portion
7 first end bridge
8 second end bridge
9 central portion of first elongated portion
10 thrust device
11 first pad
12 first disc input side end portion of first elongated portion
13 second disc output side end portion of first elongated portion
14 central portion of second elongated portion
15 additional thrust device
16 second pad
17 first disc input side end portion of second elongated portion
18 second disc output side end portion of second elongated portion
19 caliper body securing devices
20 longitudinal base rib
21 enlarged base
22 caliper body lightening openings or recesses
23 lens-shaped opening
24 bottom wall
25 central rib
26 further reinforcing rib
27 lightening windows
28 lightening recesses
29 upper edge
30 first vehicle side caliper half-body
31 second wheel side caliper half-body
32 calibrated screws
33 screw holes
34 tangential reinforcing ribs
35 disc brake outer edge
36 through windows
37 at least one central connection bridge
38 disc brake caliper
39 fluidic connection devices of the brake fluid distribution circuit to the thrust devices
40 drain device
T-T tangential direction
A-A axial direction
R-R radial direction
a-a axis of rotation of the brake disc

## Claims

1. A disc brake caliper body (1) suitable to arrange astride of a brake disc (2), such brake disc (2) having a first braking surface (3), or vehicle side braking surface, and a second braking surface (4), or wheel side braking surface, and defining an axial direction (A-A) parallel to or coincident with a rotational axis (a-a) of the brake disc (2), an orthogonal tangential direction (T-T) and a radial direction (R-R) orthogonal to said axial direction (A-A) and said tangential direction (T-T);
- said caliper body (1) comprising a first vehicle side elongated portion (5) suitable to face said first braking surface (3) of the brake disc (2);
- said caliper body (1) comprising a second wheel side elongated portion (6), opposite said first vehicle side elongated portion (5) and suitable to face said second braking surface (4) of the brake disc (2);
- said caliper body (1) comprising a first end bridge (7), or disc input bridge, connecting said first vehicle side elongated portion (5) to said second wheel side elongated portion (6) so as to be arranged astride of the brake disc (2) when the caliper body is assembled to the brake disc;
- said caliper body (1) comprising a second end bridge (8), or disc output bridge, connecting said first vehicle side elongated portion (5) to said second wheel side elongated portion (6) so as to be arranged astride of the brake disc (2) when the caliper body is assembled to the brake disc;
- said first elongated portion (5) comprising a first elongated portion central portion (9); said first elongated portion central portion (9) comprising at least one thrust device (6) housed therein and suitable to affect a first pad (7) against said first braking surface (3) to exert a braking action;
- said first elongated portion (5) further comprising a first elongated portion first disc input side end portion (12) arranged at the free end of said first elongated portion (5) and connected to said first end bridge (7), or disc input bridge;
- said first elongated portion (5) further comprising a first elongated portion second disc output side end portion (13) arranged at the opposite free end of said first elongated portion (5) and connected to said second end bridge (8), or disc output bridge;
- said second elongated portion (6) comprising a second elongated portion central portion (14); said second elongated portion central portion (14) being arranged facing said first elongated portion central portion (9) when the caliper body is not mounted astride of the disc and without pads (11, 16);
- said second elongated portion (6) further comprising a second elongated portion first disc input side end portion (17) arranged at the free end of said second elongated portion (6) and connected to said first end bridge (7), or disc input bridge;
- said second elongated portion (6) further comprising a second elongated portion second disc output side end portion (18) arranged at the opposite free end of said second elongated portion (6) and connected to said second end bridge (8), or disc output bridge;
- said first vehicle side elongated portion (5) comprising caliper body securing devices (19) for removably connecting the caliper body (1) to a caliper body support or stub axle of the vehicle;
- said first vehicle side elongated portion (5) and said second wheel side elongated portion (6) extend substantially according to a tangential direction (T-T);
wherein
- said caliper body (1) has, at least one of the end portions (12, 13, 17, 18) elongated portions (5, 6) in the form of a rib having a longitudinal base (20) extending substantially according to the tangential direction (T-T);
- said longitudinal base ribs (20) are at least one pair of base ribs (20) arranged on the same end portion (12, 13, 17, 18) and are arranged flanking each other extending mutually spaced apart for at least one length thereof; and in which
- said ribs (20) of the at least one pair of base ribs, in at least one the ends thereof, are mutually joined to form a continuous base rib (20) that is folded onto itself;
- both the first elongated portion disc input and output side end portions (12, 13) have said pair of base ribs that is folded onto itself (20);
**characterized in that**
said pairs of base ribs (20) extend along said first vehicle side elongated portion (5) and are joined in a central rib (25) projecting from the caliper body (1) to the axial direction (A-A) at least in the first elongated portion central portion (9) to protect the at least one thrust device (10) .

2. The disc brake caliper body (1) according to claim 1, wherein
- pairs of base ribs (20) are provided for at each end portion (12, 13, 17, 18) of the elongated portions (5, 6); and/or
wherein
- said second elongated portion (6) comprises a second elongated portion central portion (14); said second elongated portion central portion (14) comprising at least one further thrust device (15) housed therein and suitable to affect a second pad (16) against said second braking surface (4) to exert said braking action; and/or wherein
- said pairs of base ribs (20) project from the caliper body (1) so that, looking at the caliper body along the radial direction (R-R), the ribs (20) substantially define the profile of the caliper body for the protection thereof.

3. The disc brake caliper body (1) according to claim 2, wherein
- said pairs of base ribs (20) form an enlarged base (21) according to the axial (A-A) and tangential (T-T) directions extending from said central portions (9, 14), so as to protect and stiffen the caliper body (1) and to allow lightening openings or recesses (22); and/or wherein
- at least one pair of base ribs (20) has the joined portion to form a base rib that is continuous and folded onto itself (20), curving with respect to the tangential direction (T-T) by folding onto said caliper body (1) to protect the end thereof.

4. The disc brake caliper body (1) according to any of the preceding claims, wherein
- said at least one pair of base ribs (20) surrounds a lens-shaped opening (23) in the caliper body (1) having a substantially lens shape; and/or wherein
- said lens-shaped opening is a non-through or blind opening having a bottom wall (24).

5. The disc brake caliper body (1) according to any of the preceding claims, wherein
- a further reinforcing rib (26) is provided for, extending parallel to said central rib (25) and arranged about the at least one thrust device (10).

6. The disc brake caliper body (1) according to any of the preceding claims, wherein
- the caliper body (1) reinforced by said at least one pair of base ribs (20) has lightening windows (27) or lightening recesses (28); and/or wherein
- said lightening recesses (28) are arranged aligned along an upper edge (29) of the second wheel side elongated portion (6) .

7. The disc brake caliper body (1) according to any of the preceding claims, wherein
- said caliper body comprises two caliper half-bodies (30, 31) mutually connected by calibrated screws (32) that are housed in holes (33) provided for in the caliper half-bodies (30,31), in which at least one or of said holes is provided for at the end portion of the continuous base rib (20) folded onto itself.

8. The disc brake caliper body (1) according to any of the preceding claims, wherein
- between said first elongated portion and second elongated portion central portions (9, 14) and at least one of said end bridges (7; 8), tangential reinforcing ribs (34) are provided, which are mutually parallel and substantially directed along said tangential direction (T-T) or parallel to an outer edge (35) of the brake disc (2) of which said caliper body (1) is suitable to be arranged astride, said tangential reinforcing ribs (34) are detached from said base ribs (20), forming through windows (36) between the latter and the remaining part of the caliper body (1); and/or wherein
- between said first elongated portion and second elongated portion central portions (9, 14), at least one central connection bridge (37) is provided for; and/or wherein
- said tangential reinforcing ribs (34) are arranged between said at least one central connection bridge (37) and said at least one of the end bridges (7, 8); and/or wherein
in place of the base ribs (20), between said first elongated portion and second elongated portion central portions (9, 14) and at least one of said end bridges (7; 8), tangential reinforcing ribs (34) are provided for, which are mutually between and substantially directed along said tangential direction (T-T) or parallel to an outer edge (35) of the brake disc (2) of which said caliper body (1) is suitable to arrange astride, said tangential reinforcing ribs (34) are detached from said base ribs (20), forming through windows (36) between the latter and the remaining part of the caliper body (1).

9. A disc brake caliper (38) comprising a caliper body (1) as defined in any of the preceding claims, further comprising brake pads (11, 16) arranged facing said elongated portions (5, 6) and fluid connection devices of the brake fluid distribution circuit to the thrust devices (39), as well as at least one drain device (40) of the possible air that is present within the brake fluid distribution circuit.

10. A disc brake caliper assembly comprising a disc brake caliper (38) according to claim 9, and a disc brake (2).

11. The disc brake caliper body (1) according to claim 1, **characterized in that**, between said first elongated portion and second elongated portion central portions (9, 14) and at least one of said end bridges (7, 8), tangential reinforcing ribs (34) are provided for, which are arranged mutually parallel and substantially directed along said tangential direction (T-T) or parallel to an outer edge (35) of the brake disc (2) of which said caliper body (1) is suitable to be arranged astride, said tangential reinforcing ribs (34) have a central portion thereof that is detached from the caliper body (1), thus forming through windows (36) between said ribs (34) and the remaining part of the caliper body (1).

## Patentansprüche

1. Scheibenbremsen-Sattelkörper (1), welcher dazu geeignet ist, rittlings einer Bremsscheibe (2) anzuordnen, wobei eine derartige Bremsscheibe (2) eine erste Bremsfläche (3) oder eine fahrzeugseitige Bremsfläche und eine zweite Bremsfläche (4) oder eine radseitige Bremsfläche aufweist und eine axiale Richtung (A-A) parallel oder zusammenfallend mit einer Rotationsachse (a-a) der Bremsscheibe (2), eine orthogonale tangentiale Richtung (T-T) und eine radiale Richtung (R-R) orthogonal zu der axialen Richtung (A-A) und der tangentialen Richtung (T-T) definiert;
- wobei der Sattelkörper (1) einen ersten fahrzeugseitigen länglichen Abschnitt (5) umfasst, welcher dazu geeignet ist, zu der ersten Bremsfläche (3) der Bremsscheibe (2) zu weisen;
- wobei der Sattelkörper (1) einen zweiten radseitigen länglichen Abschnitt (6) umfasst, welcher dem ersten fahrzeugseitigen länglichen Abschnitt (5) entgegengesetzt ist und dazu geeignet ist, zu der zweiten Bremsfläche (4) der Bremsscheibe (2) zu weisen;
- wobei der Sattelkörper (1) eine erste Endbrücke (7) oder eine Scheibeneingabebrücke umfasst, welche den ersten fahrzeugseitigen länglichen Abschnitt (5) mit dem zweiten radseitigen länglichen Abschnitt (6) verbindet, um rittlings der Bremsscheibe (2) angeordnet zu sein, wenn der Sattelkörper an der Bremsscheibe angeordnet ist;
- wobei der Sattelkörper (1) eine zweite Endbrücke (8) oder eine Scheibenausgabebrücke umfasst, welche den ersten fahrzeugseitigen länglichen Abschnitt (5) mit dem zweiten radseitigen länglichen Abschnitt (6) verbindet, um rittlings der Bremsscheibe (2) angeordnet zu sein, wenn der Sattelkörper an der Bremsscheibe angeordnet ist;
- wobei der erste längliche Abschnitt (5) einen zentralen Abschnitt des ersten länglichen Abschnitts (9) umfasst; wobei der zentrale Abschnitt des ersten länglichen Abschnitt (9) wenigstens eine Schubvorrichtung (6) umfasst, welche darin aufgenommen ist und dazu geeignet ist, einen ersten Klotz (7) gegen die erste Bremsfläche (3) einzuwirken, um eine Bremswirkung auszuüben;
- wobei der erste längliche Abschnitt (5) ferner einen ersten Scheibeneingabe-seitigen Endabschnitt des ersten länglichen Abschnitts (12) aufweist, welcher an dem freien Ende des ersten länglichen Abschnitt (5) angeordnet ist und mit der ersten Endbrücke (7) oder der Scheibeneingabebrücke verbunden ist;
- wobei der erste längliche Abschnitt (5) ferner einen zweiten Scheibenausgabe-seitigen Endabschnitt des ersten länglichen Abschnitts (13) umfasst, welcher an dem entgegengesetzten freien Ende des ersten länglichen Abschnitts (5) angeordnet ist und mit der zweiten Endbrücke (8) oder der Scheibenausgabebrücke verbunden ist;
- wobei der zweite längliche Abschnitt (6) einen zentralen Abschnitt des zweiten länglichen Abschnitts (14) umfasst; wobei der zentrale Abschnitt des zweiten länglichen Abschnitts (14) zu dem zentralen Abschnitt des ersten länglichen Abschnitts (9) weisend angeordnet ist, wenn der Sattelkörper nicht rittlings der Scheibe und ohne Klötze (11, 16) montiert ist;
- wobei der zweite längliche Abschnitt (6) ferner einen ersten Scheibeneingabe-seitigen Endabschnitt des zweiten länglichen Abschnitts (17) umfasst, welcher an dem freien Ende des zweiten länglichen Abschnitts (6) angeordnet ist und mit der ersten Endbrücke (7) oder der Scheibeneingabebrücke verbunden ist;
- wobei der zweite längliche Abschnitt (6) ferner einen zweiten Scheibenausgabe-seitigen Endabschnitt des zweiten länglichen Abschnitts (18) umfasst, welcher an dem entgegengesetzten freien Ende des zweiten länglichen Abschnitts (6) angeordnet ist und mit der zweiten Endbrücke (8) oder der Scheibenausgabebrücke verbunden ist;
- wobei der erste fahrzeugseitige längliche Abschnitt (5) Sattelkörper-Sicherungsvorrichtungen (19) zum lösbaren Verbinden des Sattelkörpers (1) mit einer Sattelkörper-Halterung oder einem Achsschenkel des Fahrzeugs umfasst;
- wobei sich der erste fahrzeugseitige längliche Abschnitt (5) und der zweite radseitige längliche Abschnitt (6) im Wesentlichen gemäß einer tangentialen Richtung (T-T) erstrecken;
wobei
- der Sattelkörper (1) wenigstens eines aus den Endabschnitten (12, 13, 17, 18) der länglichen Abschnitte (5, 6) in der Form einer Rippe aufweist, welche eine longitudinale Basis (20) aufweist, welche sich im Wesentlichen gemäß der tangentialen Richtung (T-T) erstreckt;
- wobei die longitudinalen Basisrippen (20) wenigstens ein Paar von Basisrippen (20) sind, welche an dem gleichen Endabschnitt (12, 13, 17, 18) angeordnet sind und einander flankierend, sich voneinander beabstandet um wenigstens eine Länge davon erschreckend angeordnet sind; und wobei
- die Rippen (20) des wenigstens einen Paares von Basisrippen, in wenigstens einem der Enden davon, miteinander verbunden sind, um eine durchgängige Basisrippe (20) zu bilden, welche auf sich selbst gefaltet ist;
- beide der Scheibeneingabe- und Scheibenausgabe-seitigen Endabschnitte des ersten länglichen Abschnitts (12, 13) das Paar von Basisrippen aufweisen, welches auf sich selbst gefaltet ist (20); **dadurch gekennzeichnet, dass**
sich die Paare von Basisrippen (20) entlang des ersten fahrzeugseitigen länglichen Abschnitts (5) erstrecken und in einer zentralen Rippe (25) verbunden sind, welche von dem Sattelkörper (1) zu der axialen Richtung (A-A) wenigstens in dem zentralen Abschnitt des ersten länglichen Abschnitts (9) vorsteht, um die wenigstens eine Schubvorrichtung (10) zu schützen.

2. Scheibenbremsen-Sattelkörper (1) nach Anspruch 1, wobei
- Paare von Basisrippen (20) an jedem Endabschnitt (12, 13, 17, 18) der länglichen Abschnitte (5, 6) bereitgestellt sind; und/oder wobei
- der zweite längliche Abschnitt (6) einen zentralen Abschnitt des zweiten länglichen Abschnitts (14) umfasst; wobei der zentrale Abschnitt des zweiten länglichen Abschnitts (14) wenigstens eine weitere Schubvorrichtung (15) umfasst, welche darin aufgenommen ist und dazu geeignet ist, einen zweiten Klotz (16) gegen die zweite Bremsfläche (4) einzuwirken, um die Bremshandlung auszuüben; und/oder wobei
- die Paare von Basisrippen (20) von dem Sattelkörper (1) vorstehen, so dass, wenn der Sattelkörper entlang der radialen Richtung (R-R) betrachtet wird, die Rippen (20) im Wesentlichen das Profil des Sattelkörpers für den Schutz davon definieren.

3. Scheibenbremsen-Sattelkörper (1) nach Anspruch 2, wobei
- die Paare von Basisrippen (20) eine vergrößerte Basis (21) gemäß den axialen (A-A) und tangentialen (T-T) Richtungen bilden, welche sich von den zentralen Abschnitten (9, 14) erstrecken, um den Sattelkörper (1) zu schützen und zu versteifen, und um Gewichtsreduktionsöffnungen oder -Ausnehmungen (22) zu erlauben; und/oder wobei
- wenigstens ein Paar von Basisrippen (20) den verbundenen Abschnitt aufweist, um eine Basisrippe zu bilden, welche durchgängig und auf sich selbst gefaltet ist (20), in Bezug auf die tangentiale Richtung (T-T) durch Falten auf den Sattelkörper (1) gekrümmt, um das Ende davon zu schützen.

4. Scheibenbremsen-Sattelkörper (1) nach einem der vorhergehenden Ansprüche, wobei
das wenigstens eine Paar von Basisrippen (20) eine linsenförmige Öffnung (23) in dem Sattelkörper (1) umgibt, welche eine im Wesentlichen Linsenform aufweist; und/oder wobei
- die linsenförmige Öffnung keine Durchgangsöffnung ist oder eine Blindöffnung ist, welche eine untere Wand (24) aufweist.

5. Scheibenbremsen-Sattelkörper (1) nach einem der vorhergehenden Ansprüche, wobei
- eine weitere Verstärkungsrippe (26) bereitgestellt ist, welche sich parallel zu der zentralen Rippe (25) erstreckt und um die wenigstens eine Schubvorrichtung (10) angeordnet ist.

6. Scheibenbremsen-Sattelkörper (1) nach einem der vorhergehenden Ansprüche, wobei
- der Sattelkörper (1), welcher durch das wenigstens eine Paar von Basisrippen (20) verstärkt ist, Gewichtsreduktionsfenster (27) oder Gewichtsreduktionsausnehmungen (28) aufweist; und/oder wobei
- die Gewichtsreduktionsausnehmungen (28) entlang eines oberen Rands (29) des zweiten radseitigen länglichen Abschnitts (6) ausgerichtet angeordnet sind.

7. Scheibenbremsen-Sattelkörper (1) nach einem der vorhergehenden Ansprüche, wobei
- der Sattelkörper zwei Sattel-Halbkörper (30, 31) umfasst, welche durch kalibrierte Schrauben (32) miteinander verbunden sind, welche in Löchern (33) aufgenommen sind, welche in den Sattel-Halbkörpern (30, 31) bereitgestellt sind, wobei wenigstens eines der Löcher an dem Endabschnitt der durchgängigen Basisrippe (20) bereitgestellt ist, welche auf sich selbst gefaltet ist.

8. Scheibenbremsen-Sattelkörper (1) nach einem der vorhergehenden Ansprüche, wobei
- zwischen den zentralen Abschnitten des ersten länglichen Abschnitts und des zweiten länglichen Abschnitts (9, 14) und wenigstens einer der Endbrücken (7; 8) tangentiale Verstärkungsrippen (34) bereitgestellt sind, welche zueinander parallel und im Wesentlichen entlang der tangentialen Richtung (T-T) oder parallel zu einem äußeren Rand (35) der Bremsscheibe (2) gerichtet sind, deren Sattelkörper (1) dazu geeignet ist, rittlings angeordnet zu sein, wobei die tangentialen Verstärkungsrippen (34) von den Basisrippen (20) gelöst sind, wobei Durchgangsfenster (36) zwischen den Letzteren und dem verbleibenden Teil des Sattelkörpers (1) gebildet sind; und/oder wobei
- zwischen den zentralen Abschnitten des ersten länglichen Abschnitts und des zweiten länglichen Abschnitts (9, 14) wenigstens eine zentrale Verbindungsbrücke (37) bereitgestellt ist; und/oder wobei
- die tangentialen Verstärkungsrippen (34) zwischen der wenigstens einen zentralen Verbindungsbrücke (37) und der wenigstens einen der Endbrücken (7, 8) angeordnet sind; und/oder wobei
anstelle der Basisrippen (20) zwischen den zentralen Abschnitten des ersten länglichen Abschnitts und des zweiten länglichen Abschnitts (9, 14) und wenigstens einer der Endbrücken (7; 8) tangentiale Verstärkungsrippen (34) bereitgestellt sind, welche gegenseitig zwischen und im Wesentlichen entlang der tangentialen Richtung (T-T) gerichtet oder parallel zu einem äußeren Rand (35) der Bremsscheibe (2) sind, deren Sattelkörper (1) dazu geeignet ist, rittlings angeordnet zu sein, wobei die tangentialen Verstärkungsrippen (34) von den Basisrippen (20) gelöst sind, wobei Durchgangsfenster (36) zwischen den Letzteren und dem verbleibenden Teil des Sattelkörpers (1) gebildet sind.

9. Scheibenbremssattel (38), umfassend einen Sattelkörper (1), wie in einem der vorhergehenden Ansprüche definiert, ferner umfassend Bremsklötze (11, 16), welche zu den länglichen Abschnitten (5, 6) weisend angeordnet sind, und Fluidverbindungsvorrichtungen des Bremsfluid-Verteilungskreislaufs an die Schubvorrichtungen (39) sowie wenigstens eine Ablassvorrichtung (40) der möglichen Luft, welche innerhalb des Bremsfluid-Verteilungskreislaufs vorhanden ist.

10. Scheibenbremssattelanordnung, umfassend einen Scheibenbremssattel (38) nach Anspruch 9 und eine Scheibenbremse (2).

11. Scheibenbremsen-Sattelkörper (1) nach Anspruch 1,
**dadurch gekennzeichnet, dass** zwischen den zentralen Abschnitten des ersten länglichen Abschnitts und des zweiten länglichen Abschnitts (9, 14) und wenigstens einer der Endbrücken (7, 8) tangentiale Verstärkungsrippen (34) bereitgestellt sind, welche zueinander parallel und im Wesentlichen entlang der tangentialen Richtung (T-T) gerichtet oder parallel zu einem äußeren Rand (35) der Bremsscheibe (2) angeordnet sind, deren Sattelkörper (1) dazu geeignet ist, rittlings angeordnet zu sein, wobei die tangentialen Verstärkungsrippen (34) einen zentralen Abschnitt davon aufweisen, welcher von dem Sattelkörper (1) gelöst ist, wodurch Durchgangsfenster (36) zwischen den Rippen (34) und dem verbleibenden Teil des Sattelkörpers (1) gebildet sind.

## Revendications

1. Corps d'étrier de frein à disque (1) approprié pour être agencé à cheval sur un disque de frein (2), ledit disque de frein (2) ayant une première surface de freinage (3), ou une surface de freinage côté véhicule, et une seconde surface de freinage (4), ou une surface de freinage côté roue, et définissant une direction axiale (A-A) parallèle à ou coïncidant avec un axe de rotation (a-a) du disque de frein (2), une direction tangentielle (T-T) orthogonale et une direction radiale (R-R) orthogonale à ladite direction axiale (A-A) et ladite direction tangentielle (T-T) ;
- ledit corps d'étrier (1) comprenant une première partie allongée (5) côté véhicule appropriée pour faire face à ladite première surface de freinage (3) du disque de frein (2) ;
- ledit corps d'étrier (1) comprenant une seconde partie allongée (6) côté roue, opposée à ladite première partie allongée (5) côté véhicule et appropriée pour faire face à ladite seconde surface de freinage (4) du disque de frein (2) ;
- ledit corps d'étrier (1) comprenant un premier pont d'extrémité (7), ou pont d'entrée de disque, reliant ladite première partie allongée (5) côté véhicule à ladite seconde partie allongée (6) côté roue de façon à être agencé à cheval sur le disque de frein (2) lorsque le corps d'étrier est assemblé au disque de frein ;
- ledit corps d'étrier (1) comprenant un second pont d'extrémité (8), ou pont de sortie de disque, reliant ladite première partie allongée (5) côté véhicule à ladite seconde partie allongée (6) côté roue de façon à être agencé à cheval sur le disque de frein (2) lorsque le corps d'étrier est assemblé au disque de frein ;
- ladite première partie allongée (5) comprenant une partie centrale de première partie allongée (9) ; ladite partie centrale de première partie allongée (9) comprenant au moins un dispositif de poussée (6) logé à l'intérieur de celle-ci et approprié pour agir sur une première plaquette (7) contre ladite première surface de freinage (3) afin d'exercer une action de freinage ;
- ladite première partie allongée (5) comprenant en outre une première partie d'extrémité côté entrée de disque de première partie allongée (12) agencée à l'extrémité libre de ladite première partie allongée (5) et reliée audit premier pont d'extrémité (7), ou pont d'entrée de disque ;
- ladite première partie allongée (5) comprenant en outre une seconde partie d'extrémité côté sortie de disque de première partie allongée (13) agencée à l'extrémité libre opposée de ladite première partie allongée (5) et reliée audit second pont d'extrémité (8), ou pont de sortie de disque ;
- ladite seconde partie allongée (6) comprenant une partie centrale de seconde partie allongée (14) ; ladite partie centrale de seconde partie allongée (14) étant agencée face à ladite partie centrale de première partie allongée (9) lorsque le corps d'étrier n'est pas monté à cheval sur le disque et sans plaquettes (11, 16) ;
- ladite seconde partie allongée (6) comprenant en outre une première partie d'extrémité côté entrée de disque de seconde partie allongée (17) agencée à l'extrémité libre de ladite seconde partie allongée (6) et reliée audit premier pont d'extrémité (7), ou pont d'entrée de disque ;
- ladite seconde partie allongée (6) comprenant en outre une seconde partie d'extrémité côté sortie de disque de seconde partie allongée (18) agencée à l'extrémité libre opposée de ladite seconde partie allongée (6) et reliée audit second pont d'extrémité (8), ou pont de sortie de disque ;
- ladite première partie allongée (5) côté véhicule comprenant des dispositifs de fixation de corps d'étrier (19) pour relier de manière amovible le corps d'étrier (1) à un support de corps d'étrier ou demi-essieu du véhicule ;
- ladite première partie allongée (5) côté véhicule et ladite seconde partie allongée (6) côté roue s'étendent sensiblement dans une direction tangentielle (T-T) ;
dans lequel
- au moins l'une des parties d'extrémité (12, 13, 17, 18) des parties allongées (5, 6) dudit corps d'étrier (1) se présente sous la forme d'une nervure comportant une base longitudinale (20) s'étendant sensiblement dans la direction tangentielle (T-T) ;
- lesdites nervures de base longitudinales (20) sont au moins une paire de nervures de base (20) agencées sur la même partie d'extrémité (12, 13, 17, 18) et sont agencées de chaque côté, à une certaine distance l'une de l'autre sur au moins une longueur de celles-ci ; et dans lequel
- lesdites nervures (20) de l'au moins une paire de nervures de base, à au moins une de leurs extrémités, sont jointes entre elles pour former une nervure de base continue (20) repliée sur elle-même ;
- les parties d'extrémité côté entrée et sortie de disque de première partie allongée (12, 13) comportent ladite paire de nervures de base qui est repliée sur elle-même (20) ;
**caractérisé en ce que**
lesdites paires de nervures de base (20) s'étendent le long de ladite première partie allongée (5) côté véhicule et sont jointes en une nervure centrale (25) faisant saillie depuis le corps d'étrier (1) dans la direction axiale (A-A) au moins dans la partie centrale de première partie allongée (9) afin de protéger l'au moins un dispositif de poussée (10).

2. Corps d'étrier de frein à disque (1) selon la revendication 1, dans lequel
- des paires de nervures de base (20) sont prévues à chaque partie d'extrémité (12, 13, 17, 18) des parties allongées (5, 6) ; et/ou dans lequel
- ladite seconde partie allongée (6) comprend une partie centrale de seconde partie allongée (14) ; ladite partie centrale de seconde partie allongée (14) comprenant au moins un dispositif de poussée (15) supplémentaire logé à l'intérieur de celle-ci et approprié pour agir sur une seconde plaquette (16) contre ladite seconde surface de freinage (4) afin d'exercer une action de freinage ; et/ou dans lequel
- lesdites paires de nervures de base (20) font saillie depuis le corps d'étrier (1) de sorte que, en regardant le corps d'étrier le long de la direction radiale (R-R), les nervures (20) définissent sensiblement le profil du corps d'étrier pour la protection de celui-ci.

3. Corps d'étrier de frein à disque (1) selon la revendication 2, dans lequel
- lesdites paires de nervures de base (20) forment une base élargie (21) dans les directions axiale (A-A) et tangentielle (T-T) s'étendant depuis lesdites parties centrales (9, 14), de façon à protéger et raidir le corps d'étrier (1) et permettre des ouvertures ou des évidements d'allégement (22) ; et/ou dans lequel
- au moins une paire de nervures de base (20) comporte la partie jointe pour former une nervure de base qui est continue et repliée sur elle-même (20), incurvée par rapport à la direction tangentielle (T-T) en se repliant sur ledit corps d'étrier (1) afin de protéger l'extrémité de celui-ci.

4. Corps d'étrier de frein à disque (1) selon l'une quelconque des revendications précédentes, dans lequel
- ladite au moins une paire de nervures de base (20) entoure une ouverture en forme de lentille (23) dans le corps d'étrier (1) ayant sensiblement une forme de lentille ; et/ou dans lequel
- ladite ouverture en forme de lentille est une ouverture non traversante ou borgne ayant une paroi inférieure (24).

5. Corps d'étrier de frein à disque (1) selon l'une quelconque des revendications précédentes, dans lequel
- une nervure de renforcement (26) supplémentaire est prévue, s'étendant parallèlement à ladite nervure centrale (25) et agencée autour de l'au moins un dispositif de poussée (10).

6. Corps d'étrier de frein à disque (1) selon l'une quelconque des revendications précédentes, dans lequel
- le corps d'étrier (1) renforcé par ladite au moins une paire de nervures de base (20) comporte des fenêtres d'allégement (27) ou des évidements d'allégement (28) ; et/ou dans lequel
- lesdits évidements d'allégement (28) sont agencés de manière alignée le long d'un bord supérieur (29) de la seconde partie allongée (6) côté roue.

7. Corps d'étrier de frein à disque (1) selon l'une quelconque des revendications précédentes, dans lequel
- ledit corps d'étrier comprend deux demi-corps d'étrier (30, 31) reliés entre eux par des vis calibrées (32) qui sont logées dans des trous (33) prévus dans les demi-corps d'étrier (30, 31), dans lequel au moins l'un desdits trous est prévu au niveau de la partie d'extrémité de la nervure de base continue (20) repliée sur elle-même.

8. Corps d'étrier de frein à disque (1) selon l'une quelconque des revendications précédentes, dans lequel
- entre lesdites parties centrales de première partie allongée et de seconde partie allongée (9, 14) et au moins l'un desdits ponts d'extrémité (7 ; 8), sont prévues des nervures de renforcement tangentielles (34), qui sont parallèles entre elles et sensiblement dirigées le long de ladite direction tangentielle (T-T) ou parallèles à un bord extérieur (35) du disque de frein (2) sur lequel ledit corps d'étrier (1) est approprié pour être agencé à cheval, lesdites nervures de renforcement tangentielles (34) sont séparées desdites nervures de base (20), formant des fenêtres traversantes (36) entre ces dernières et la partie restante du corps d'étrier (1) ; et/ou dans lequel
- entre lesdites parties centrales de première partie allongée et de seconde partie allongée (9, 14), est prévu au moins un pont de liaison central (37) ; et/ou dans lequel
- lesdites nervures de renforcement tangentielles (34) sont agencées entre ledit au moins un pont de liaison central (37) et ledit au moins un des ponts d'extrémité (7, 8) ; et/ou dans lequel
à la place des nervures de base (20), entre lesdites parties centrales de première partie allongée et de seconde partie allongée (9, 14) et au moins l'un desdits ponts d'extrémité (7 ; 8), sont prévues des nervures de renforcement tangentielles (34), qui sont mutuellement entre et dirigées sensiblement le long de ladite direction tangentielle (T-T) ou parallèles à un bord extérieur (35) du disque de frein (2) sur lequel ledit corps d'étrier (1) est approprié pour être agencé à cheval, lesdites nervures de renforcement tangentielles (34) sont séparées desdites nervures de base (20), formant des fenêtres traversantes (36) entre ces dernières et la partie restante du corps d'étrier (1).

9. Etrier de frein à disque (38) comprenant un corps d'étrier (1) selon l'une quelconque des revendications précédentes, comprenant en outre des plaquettes de frein (11, 16) agencées face auxdites parties allongées (5, 6) et des dispositifs de liaison fluidique du circuit de distribution de liquide de frein aux dispositifs de poussée (39), ainsi qu'au moins un dispositif de purge (40) de l'air éventuel qui est présent dans le circuit de distribution de liquide de frein.

10. Ensemble d'étrier de frein à disque comprenant un étrier de frein à disque (38) selon la revendication 9, et un frein à disque (2).

11. Corps d'étrier de frein à disque (1) selon la revendication 1, **caractérisé en ce que**, entre lesdites parties centrales de première partie allongée et de seconde partie allongée (9, 14) et au moins l'un desdits ponts d'extrémité (7, 8), sont prévues des nervures de renforcement tangentielles (34), qui sont agencées parallèlement entre elles et sensiblement dirigées le long de ladite direction tangentielle (T-T) ou parallèlement à un bord extérieur (35) du disque de frein (2) sur lequel ledit corps d'étrier (1) est approprié pour être agencé à cheval, une partie centrale desdites nervures de renforcement tangentielles (34) est séparée du corps d'étrier (1), formant ainsi des fenêtres traversantes (36) entre lesdites nervures (34) et la partie restante du corps d'étrier (1).
